# EUROPEAN PATENT SPECIFICATION

(11) **EP 2 003 145 B1**
(45) Date of publication and mention of the grant of the patent: **04.01.2012**
(21) Application number: 08158144.9
(22) Date of filing: 12.06.2008
(51) Int. Cl.: C07K 14/435, C08F 220/56

(54) **Protein stabilizing agent**
Proteinstabilisator
Agent de stabilisation des protéines

(30) Priority: 13.06.2007 JP 2007155978
(43) Date of publication of application: 17.12.2008
(73) Proprietor: JSR Corporation, Tokyo 105-8640 (JP)
(72) Inventor: Tamori, Kouji, Tokyo 105-8640 (JP); Takamoto, Eiji, Tokyo 105-8640 (JP); Ogawa, Toshihiro, Tokyo 105-8640 (JP)
(74) Representative: TBK

(56) References cited:
- GB-A- 1 173 532
- GB-A- 1 205 748

## Description

The present invention relates to the use of a copolymer as a stabilizing agent for various proteins to be used in, e.g., clinical diagnostic agents, clinical diagnostic devices, biochips, and the like.

A bovine serum albumin (BSA) is usually added to proteins used as clinical diagnostic agents such as labeled antibodies, labeled antigens, enzymes, primary antibodies and primary antigens, in order to maintain the activity of the proteins in a solution state. However, the activities of the proteins still decrease even when BSA is added. Also, when a stabilizing agent derived from living organisms is used, there is a problem of biocontamination as represented by BSE. Therefore, it is desired to develop a high-performance protein stabilizing agent obtained by chemical synthesis.

Protein stabilizing agents obtained by chemical synthesis which have been proposed include a polymer having phosphorylcholine in JP-A-10-45794, a membrane of a fatty acid ester such as a triacylglycerin as a representative in JP-A-10-279594, a polyol as represented by glycerol in JP-A-11-69973, and a polymer containing a glycoside derivative as a monomer unit in JP-A-7-255477. However, these stabilizing agents are insufficient in the effect of maintaining protein activity.

An object of the present invention is to provide the use of a copolymer as a high-performance protein stabilizing agent obtained by chemical synthesis, which is useful for maintaining activity of a labeled antibody or the like to be used as a clinical diagnostic agent.

This and other objects of the present invention have been achieved by the use of a copolymer as a protein stabilizing agent comprising a copolymer comprising:
a repeating unit (A) represented by the following formula (1): 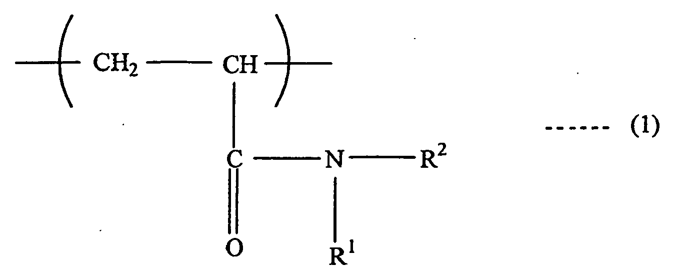 wherein R¹ and R² each independently represents a hydrogen atom or a substituted or unsubstituted alkyl group having 1 to 8 carbon atoms and R¹ and R² may be combined with each other to form a ring structure; and
a repeating unit (B) represented by the following formula (2): 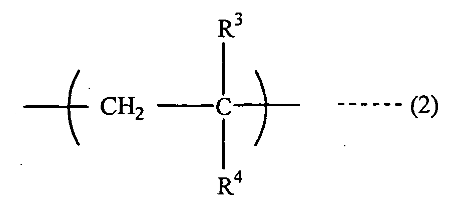 wherein R³ represents a hydrogen atom or a methyl group and R⁴ represents a phenyl group or a group represented by -CO₂R⁵ in which R⁵ represents a substituted or unsubstituted alkyl group having 1 to 12 carbon atoms, an alicyclic hydrocarbon group, or an aromatic hydrocarbon group.

### DETAILED DESCRIPTION OF THE INVENTION

In order to solve the problem, the inventors of the present invention have found that a copolymer having a specific composition has a high protein-stabilizing effect and thus have accomplished the invention.

In the above protein stabilizing agent, the repeating unit (A) may be a unit wherein R¹ is a hydrogen atom or a methyl group and R² is at least one group selected from a hydrogen atom, a methyl group, and a hydroxyethyl group in formula (1).

In the above protein stabilizing agent, the repeating unit (B) may be a structure derived from at least one monomer having solubility in water of less than 20%.

In the above protein stabilizing agent, the above repeating unit (B) may be a unit wherein R³ is a hydrogen atom or a methyl group, R⁴ is a group represented by -CO₂R⁵, and R⁵ is at least one group selected from a methyl group, an ethyl group, and a methoxyethyl group in the formula (2).

According to the above protein stabilizing agent, a high protein-stabilizing effect can be obtained by containing a copolymer comprising a repeating unit (A) represented by formula (1) and a repeating unit (B) represented by formula (2).

The followings will specifically describe the use of a copolymer as the protein stabilizing agent according to one embodiment of the invention.

### 1. Protein stabilizing agent

### 1.1. Constitution of Protein stabilizing agent

The protein stabilizing agent according to the present embodiment comprises a copolymer comprising:
a repeating unit (A) represented by the following formula (1) : 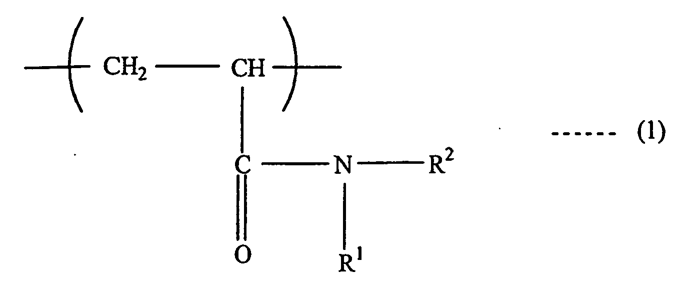 wherein R¹ and R² each independently represents a hydrogen atom or a substituted or unsubstituted alkyl group having 1 to 8 carbon atoms and R¹ and R² may be combined with each other to form a ring structure; and
a repeating unit (B) represented by the following formula (2): 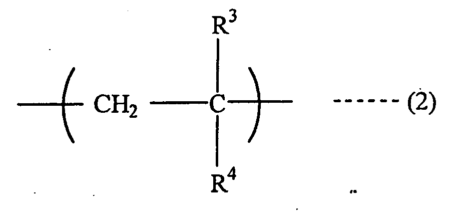 wherein R³ represents a hydrogen atom or a methyl group and R⁴ represents a phenyl group or a group represented by -CO₂R⁵ in which R⁵ represents a substituted or unsubstituted alkyl group having 1 to 12 carbon atoms, an alicyclic hydrocarbon group, or an aromatic hydrocarbon group.

The use of a copolymer as protein stabilizing agent according to the present embodiment may contain the above copolymer in a part of the protein stabilizing agent or may be constituted by the above copolymer alone.

### 1.1.1. Repeating Unit (A)

In the above copolymer, the repeating unit (A) represented by formula (1) is a main body contributing to exhibition of a high protein-stabilizing effect.

In formula (1), examples of the substituted or unsubstituted alkyl group having 1 to 8 carbon atoms represented by R¹ or R² include a linear or branched substituted or unsubstituted alkyl group. The substituted alkyl group may be substituted with a functional group such as a hydroxyl group. Moreover, R¹ and R² may be combined with each other to form a ring structure.

For example, in formula (1), it is preferable that R¹ is a hydrogen atom or a methyl group and R² is at least one group selected from a hydrogen atom, a methyl group, and a hydroxyethyl group.

### 1.1.2. Repeating Unit (B)

In the above copolymer, the repeating unit (B) represented by formula (2) shifts the hydrophilic/hydrophobic balance of the copolymer to a hydrophobic side to contribute to exhibition of a higher protein-stabilizing effect.

In formula (2), examples of the substituted or unsubstituted alkyl group having 1 to 12 carbon atoms represented by R⁵ include a linear or branched substituted or unsubstituted alkyl group. The substituted alkyl group may be substituted with a functional group such as an alkoxy group.

Moreover, in formula (2), examples of the alicyclic hydrocarbon group represented by R⁵ include an isobornyl group and a cyclohexyl group. Examples of the aromatic hydrocarbon group represented by R⁴ include a benzyl group.

For example, in formula (2), it is preferable that R³ is a hydrogen atom or a methyl group, R⁴ is a group represented by -CO₂R⁵, and R⁵ is at least one group selected from a methyl group, an ethyl group, and a methoxyethyl group.

Moreover, it is preferable that the repeating unit (B) is a structure derived from at least one monomer having solubility of less than 20% in water.

Furthermore, the above copolymer may contain one or more kinds of each of the repeating units (A) and the repeating units (B). In this connection, the above copolymer may contain the other repeating unit (C) in addition to the repeating unit (A) and the repeating unit (B).

### 1.2. Production of Protein stabilizing agent

The followings will describe the composition of monomers to be used for the production of the above copolymer.

### 1.2.1. Monomer (a)

A monomer (a) is a component for forming the repeating unit (A). It is preferable that the monomer (a) is at least one monomer selected from acrylamide and N-substituted monomers of acrylamide.

Examples of the N-substituted monomers of acrylamide include N,N-dimethylacrylamide, N,N-diethylacrylamide, N-isopropylacrylamide, N-hydroxyethylacrylamide, acryloylmorpholine, diacetoneacrylamide, and the like.

It is more preferable that the monomer (a) is at least one selected from acrylamide, N-hydroxyethylacrylamide, and N,N-dimethylacrylamide. It is further preferable that the monomer (a) is N,N-dimethylacrylamide.

### 1.2.2 Monomer (b)

A monomer (b) is a component for forming the repeating unit (B). The monomer (b) is at least one monomer having solubility in water of less than 20%.

Examples of the monomer (b) include methoxyethyl (meth) acrylate, methyl (meth) acrylate, ethyl (meth) acrylate, propyl (meth)acrylate, butyl (meth)acrylate, 2-ethylhexyl (meth)acrylate, lauryl (meth)acrylate, cyclohexyl (meth)acrylate, isobornyl (meth)acrylate, benzyl (meth)acrylate, styrene, and the like. It is more preferable that the monomer (b) is at least one selected from methyl methacrylate, ethyl acrylate, and methoxyethyl acrylate.

In the present invention, the "monomer having solubility of less than 20% in water" is a monomer wherein, after the monomer is added and stirred so as to be a monomer concentration of 20% in water at 25°C, separation of the monomer from the aqueous phase can be visually confirmed.

### 1.2.3. Composition and Polymerization of Monomers

A monomer (c) is a component for forming the other repeating unit (C). By producing the copolymer by copolymerizing 1 to 10% by weight of an anionic monomer, particularly styrenesulfonic acid, isoprenesulfonic acid, 2-acrylamido-2-methylpropanesulfonic acid, or the like as the other monomer (c) with the monomer (a) and the monomer (b), a signal-suppressing effect on a non-specific analyte is sometimes obtained in the case where the copolymer is used as a diluent for immunodiagnostic agents.

The composition of the monomers for producing the copolymer that is the protein stabilizing agent according to the present embodiment is preferably from 30 to 99% by weight of the monomer (a), from 1 to 70% by weight of the monomer (b), and from 0 to 49% by weight of the other monomers (c); more preferably from 40 to 95% by weight of the monomer (a), from 5 to 60% by weight of the monomer (b), and from 0 to 20% by weight of the other monomer (c).

The monomers can be used in the copolymerization after purification of those available as industrial raw materials or without purification.

The polymerization can be carried out by a known polymerization method such as radical polymerization, anionic polymerization, or cationic polymerization. In view of easiness of production, radical polymerization is preferable.

Moreover, the polymerization is achieved by stirring and heating the monomers together with a known solvent, an initiator, a chain-transfer agent, and the like. The polymerization time is usually from 30 minutes to 24 hours and the polymerization temperature is from about 0 to 120°C.

### 1.3. Physical Properties and Uses of Protein stabilizing agent

The number-average molecular weight of the protein stabilizing agent (copolymer) according to the present embodiment is usually from 1,000 to 1,000,000, preferably from 2,000 to 100,000, more preferably from 3,000 to 50,000. Moreover, the molecular weight distribution of the protein stabilizing agent (copolymer) according to the present embodiment is typically 1.5 to 3 as weight-average molecular weight/number-average molecular weight.

The copolymer contained in the protein stabilizing agent according to the present embodiment is water soluble. In the present invention, the "water soluble" refers to the state that the copolymer is visually soluble clearly when the copolymer is added and mixed in water so as to be a polymer solid content of 1% at 25°C.

The protein stabilizing agent according to the present embodiment can maintain protein activity over a long time by adding it into a protein solution as a stabilizing agent for labeled antibodies, labeled antigens, enzymes, primary antibodies, and primary antigens to be used as clinical diagnostic agents; a stabilizing agent for proteins contained in plasma preparations; a stabilizing agent for enzymes and the like to be used for washing contact lenses. Furthermore, the protein stabilizing agent according to the present embodiment has an effect of suppressing non-specific adsorption of proteins through coating vessels, devices, and the like as well as an effect of suppressing signals of non-specific analytes by the use as a diluent for immunodiagnostic agents.

### 2. Examples

Although the followings will describe the present invention further in detail with reference to Examples, the invention is not limited thereto.

### 2.1. Example 1

After mixing 90 g of dimethylacrylamide as a monomer (a), 10 g of methyl methacrylate as a monomer (b), and 4 g of cysteamine hydrochloride as a chain transfer agent with 900 g of water, the resulting mixture was placed in a separable flask having a stirrer. Under passing nitrogen through the mixture, the temperature of the mixture was elevated to be 70°C. After adding 1 g of 2,2'-azobis(2-methylpropionamidine) dihydrochloride, polymerization was continued for 2 hours. After elevating the temperature to be 80°C and conducting aging for 3 hours, cooling of the mixture was carried out to be room temperature. The obtained copolymer solution was purified by dialysis and further freeze-dried to obtain 82 g of a protein stabilizing agent (S-1) of the present Example.

The number-average molecular weight of the protein stabilizing agent (S-1) by GPC was 5,000 and the weight-average molecular weight thereof was 10,000.

A horseradish peroxidase-labeled mouse IgG antibody (AP124P manufactured by Millipore) was diluted 100,000-fold with a 1% aqueous protein stabilizing agent (S-1) solution and color was developed with TMB (3,3',5,5'-tetramethylbenzidene)/aqueous hydrogen peroxide solution/sulfuric acid, followed by measurement of absorbance at 450 nm (measurement of absorbance before storage). Also, a horseradish peroxidase-labeled mouse IgG antibody (AP124P manufactured by Millipore) was diluted 100,000-fold with a 1% aqueous protein stabilizing agent (S-1) solution and then it was stored at 4°C for 10 days. Thereafter, absorbance was measured in the same manner (measurement of absorbance after storage). As a result, when the absorbance of the protein stabilizing agent (S-1) before storage was regarded as 100%, the absorbance after storage which is an indicator of maintenance ratio of protein activity, was found to be 89%.

### 2.2. Example 2

A protein stabilizing agent (S-2) was obtained in the same manner as in Example 1 with the exception of the use of 50 g of N-hydroxyethylacrylamide as a monomer (a), 50 g of methoxyethyl acrylate as a monomer (b), and 2 g of cysteamine hydrochloride as a chain transfer agent instead of the use of 90 g of dimethylacrylamide as a monomer (a), 10 g of methyl methacrylate as a monomer (b), and 4 g of cysteamine hydrochloride as a chain transfer agent in Example 1.

The number-average molecular weight of the protein stabilizing agent (S-2) by GPC was 5,800 and the weight-average molecular weight thereof was 11,000.

Moreover, with the exception of the use of the protein stabilizing agent (S-2) instead of the protein stabilizing agent (S-1), as a result of measurement of the absorbance before storage and after storage in the same manner as in Example 1, the absorbance after storage relative to the absorbance before storage (100%) was found to be 83%.

### 2.3. Example 3

A protein stabilizing agent (S-3) was obtained in the same manner as in Example 1 with the exception of the use of 50 g of acrylamide as a monomer (a), 50 g of methoxyethyl acrylate as a monomer (b), and 8 g of cysteamine hydrochloride as a chain transfer agent instead of the use of 90 g of dimethylacrylamide as a monomer (a), 10 g of methyl methacrylate as a monomer (b), and 4 g of cysteamine hydrochloride as a chain transfer agent in Example 1.

The number-average molecular weight of the protein stabilizing agent (S-3) by GPC was 4,800 and the weight-average molecular weight thereof was 9,600.

Moreover, with the exception of the use of the protein stabilizing agent (S-3) instead of the protein stabilizing agent (S-1), as a result of measurement of the absorbance before storage and after storage in the same manner as in Example 1, the absorbance after storage relative to the absorbance before storage (100%) was found to be 81%.

### 2.4. Comparative Example 1

A copolymer (T-1) was obtained in the same manner as in Example 1 with the exception of the use of 100 g of dimethylacrylamide as a monomer (a) and 2 g of cysteamine hydrochloride as a chain transfer agent instead of the use of 90 g of dimethylacrylamide as a monomer (a), 10 g of methyl methacrylate as a monomer (b), and 4 g of cysteamine hydrochloride as a chain transfer agent in Example 1.

The number-average molecular weight of the copolymer (T-1) by GPC was 7,800 and the weight-average molecular weight thereof was 16,000.

Moreover, with the exception of the use of the copolymer (T-1) instead of the protein stabilizing agent (S-1), as a result of measurement of the absorbance before storage and after storage in the same manner as in Example 1, the absorbance after storage relative to the absorbance before storage (100%) was found to be 17%.

### 2.5. Comparative Example 2

A copolymer (T-2) was obtained in the same manner as in Comparative Example 1 with the exception of the use of 100 g of N-hydroxyethylacrylamide as a monomer (a) instead of the use of 100 g of dimethylacrylamide as a monomer (a) in Comparative Example 1.

The number-average molecular weight of the copolymer (T-2) by GPC was 5,800 and the weight-average molecular weight thereof was 11,000.

Moreover, with the exception of the use of the copolymer (T-2) instead of the protein stabilizing agent (S-1), as a result of measurement of the absorbance before storage and after storage in the same manner as in Example 1, the absorbance after storage relative to the absorbance before storage (100%) was found to be 24%.

### 2.6. Comparative Example 3

A copolymer (T-3) was obtained in the same manner as in Comparative Example 1 with the exception of the use of 100 g of acrylamide as a monomer (a) instead of the use of 100 g of dimethylacrylamide as a monomer (a) in Comparative Example 1.

The number-average molecular weight of the copolymer (T-3) by GPC was 7,600 and the weight-average molecular weight thereof was 15,000.

Moreover, with the exception of the use of the copolymer (T-3) instead of the protein stabilizing agent (S-1), as a result of measurement of the absorbance before storage and after storage in the same manner as in Example 1, the absorbance after storage relative to the absorbance before storage (100%) was found to be 7%.

### 2.7. Comparative Example 4

With the exception of the use of a commercially available 2-methacryloyloxyethylphosphorylcholine/butyl methacrylate copolymer as a copolymer, as a result of measurement of the absorbance before storage and after storage in the same manner as in Comparative Example 1, the absorbance after storage relative to the absorbance before storage (100%) was found to be 70%.

### 2.8. Comparative Example 5

With the exception of the use of BSA instead of the protein stabilizing agent (S-1), as a result of measurement of the absorbance before storage and after storage in the same manner as in Example 1, the absorbance after storage relative to the absorbance before storage (100%) was found to be 71%.

Although the present invention has been described in detail with reference to specific examples in the foregoing, it is apparent to person skilled in the art that it is possible to add various alterations and modifications insofar as the alterations and the modifications do not deviate from the sprit and scope of the present invention.

This patent application is based on Japanese Patent Application No. 2007-155978 filed on June 13, 2007, and the contents thereof are incorporated herein by reference.

The use of a copolymer as protein stabilizing agent comprising a copolymer comprising: a repeating unit (A) represented by the following formula (1) and a repeating unit (B) represented by the following formula (2): 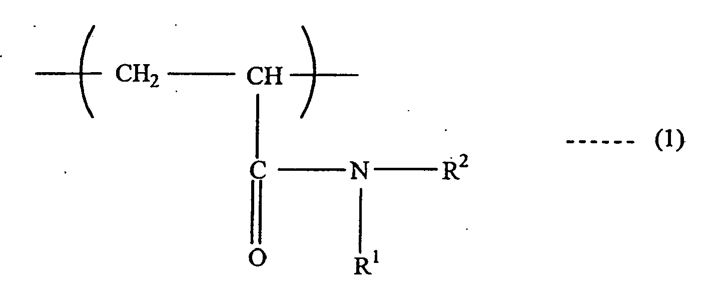 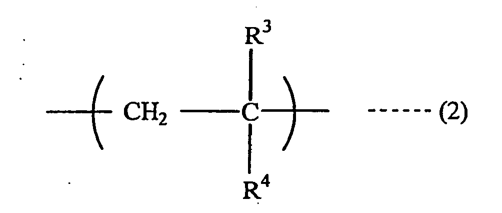 wherein R¹, R², R³ and R⁴ are defined in the description.

## Claims

1. Use of a copolymer as a protein stabilizing agent, the copolymer comprising:
a repeating unit (A) represented by the following formula (1) : 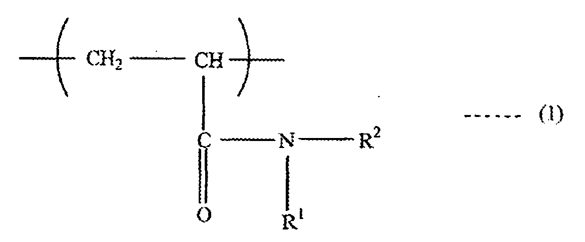 wherein R¹ and R² each independently represents a hydrogen atom or a substituted or unsubstituted alkyl group having 1 to 8 carbon atoms and R¹ and R² may be combined with each other to form a ring structure; and
a repeating unit (B) represented by the following formula (2): 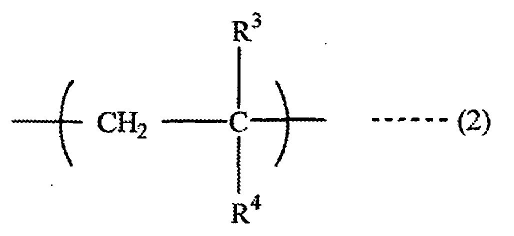 wherein R³ represents a hydrogen atom or a methyl group and R⁴ represents a phenyl group or a group represented by -CO₂R⁵ in which R⁵ represents a substituted or unsubstituted alkyl group having 1 to 12 carbon atoms, an alicyclic hydrocarbon group, or an aromatic hydrocarbon group.

2. Use according to claim 1, wherein the repeating unit (A) is a unit wherein R¹ is a hydrogen atom or a methyl group and R² is at least one group selected from a hydrogen atom, a methyl group, and a hydroxyethyl group in formula (1).

3. Use according to claim 1 or 2, wherein the repeating unit (B) is a structure derived from at least one monomer having solubility of less than 20% in water.

4. Use according to any one of claim 1 to 3, wherein the repeating unit (B) is a unit wherein R³ is a hydrogen atom or a methyl group, R⁴ is a group represented by -CO₂R⁵, and R⁵ is at least one group selected from a methyl group, an ethyl group, and a methoxyethyl group in formula (2).

## Patentansprüche

1. Verwendung eines Copolymers als ein proteinstabilisierendes Agens, wobei das Copolymer umfasst:
eine durch die folgende Formel (1) dargestellte Wiederholungseinheit (A): 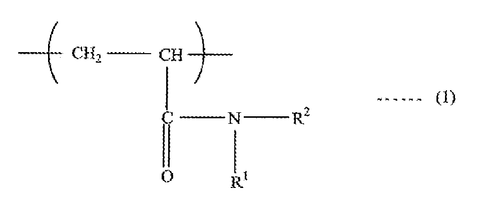 wobei R¹ und R² jeweils unabhängig ein Wasserstoffatom oder eine substituierte oder unsubstituierte Alkylgruppe mit 1 bis 8 Kohlenstoffatomen darstellt und R¹ und R² können miteinander verbunden sein, um eine Ringstruktur zu bilden; und
eine durch die folgende Formel (2) dargestellte Wiederholungseinheit (B): 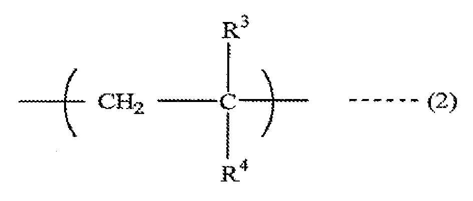 wobei R³ ein Wasserstoffatom oder eine Methylgruppe darstellt und R⁴ eine Phenylgruppe oder eine durch -CO₂R⁵ dargestellte Gruppe darstellt, in welcher R⁵ eine substituierte oder unsubstituierte Alkylgruppe mit 1 bis 12 Kohlenstoffatomen, eine alizyklische Kohlenwasserstoffgruppe oder eine aromatische Kohlenwasserstoffgruppe darstellt.

2. Verwendung nach Anspruch 1, wobei die Wiederholungseinheit (A) eine Einheit ist, wobei in Formel (1) R¹ ein Wasserstoffatom oder eine Methylgruppe ist und R² zumindest eine Gruppe ausgewählt aus einem Wasserstoffatom, einer Methylgruppe und einer Hydroxyethylgruppe ist.

3. Verwendung nach Anspruch 1 oder 2, wobei die Wiederholungseinheit (B) eine Einheit ist, die von zumindest einem Monomer mit einer Löslichkeit von weniger als 20 % in Wasser abgeleitet ist.

4. Verwendung nach einem der Ansprüche 1 bis 3, wobei die Wiederholungseinheit (B) eine Einheit ist, wobei in Formel (2) R³ ein Wasserstoffatom oder eine Methylgruppe ist, R⁴ eine durch -CO₂R⁵ dargestellte Gruppe ist und R⁵ zumindest eine Gruppe ausgewählt aus einer Methylgruppe, einer Ethylgruppe und einer Methoxyethylgruppe ist.

## Revendications

1. Utilisation d'un copolymère comme agent stabilisant de protéine, le copolymère comprenant :
un motif de répétition (A) représenté par la formule (1) suivante : 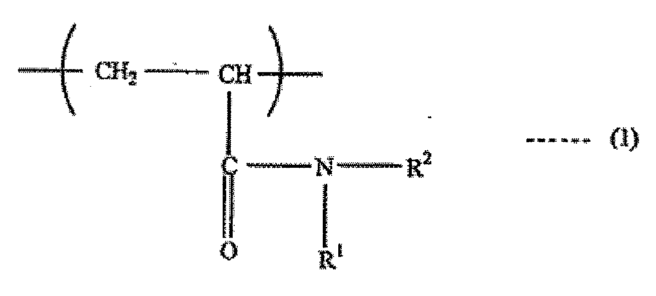 dans laquelle R¹ et R² représentent chacun de manière indépendante un atome d'hydrogène ou un groupe alkyle substitué ou non substitué ayant 1 à 8 atomes de carbone et R¹ et R² peuvent être combinés l'un à l'autre pour former une structure cyclique ; et
un motif de répétition (B) représenté par la formule (2) suivante : 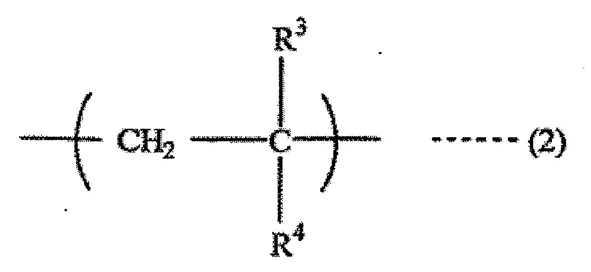 dans laquelle R³ représente un atome d'hydrogène ou un groupe méthyle et R⁴ représente un groupe phényle ou un groupe représenté par -CO₂R⁵ dans lequel R⁵ représente un groupe alkyle substitué ou non substitué ayant 1 à 12 atomes de carbone, un groupe hydrocarboné alicyclique, ou un groupe hydrocarboné aromatique.

2. Utilisation selon la revendication 1, dans laquelle le motif de répétition (A) est un motif dans lequel R¹ est un atome d'hydrogène ou un groupe méthyle et R² est au moins un groupe choisi parmi un atome d'hydrogène, un groupe méthyle, et un groupe hydroxyéthyle dans la formule (1).

3. Utilisation selon la revendication 1 ou 2, dans laquelle le motif de répétition (B) est une structure dérivée d'au moins un monomère ayant une solubilité de moins de 20% dans l'eau.

4. Utilisation selon l'une quelconque des revendications 1 à 3, dans laquelle le motif de répétition (B) est un motif dans lequel R³ est un atome d'hydrogène ou un groupe méthyle, R⁴ est un groupe représenté par -CO₂R⁵, et R⁵ est au moins un groupe choisi parmi un groupe méthyle, un groupe éthyle, et un groupe méthoxyéthyle dans la formule (2).
